# EUROPÄISCHE PATENTSCHRIFT

(11) **EP 3 389 916 B1**
(45) Veröffentlichungstag und Bekanntmachung des Hinweises auf die Patenterteilung: **19.06.2024**
(21) Anmeldenummer: 16838020.2
(22) Anmeldetag: 12.12.2016
(51) Int. Cl.: C23C 4/02, B29C 45/14, B32B 15/08, B32B 3/08, B32B 3/30, B32B 7/04, B32B 15/18, B23K 26/322, B23K 26/244, B23K 26/323, B23K 103/04, B23K 103/08, B23K 103/18, B29K 705/00

(54) **VERFAHREN ZUM HERSTELLEN EINES KUNSTSTOFF-METALL-HYBRIDBAUTEILS**
METHOD FOR PRODUCING A PLASTIC-METAL HYBRID COMPONENT
PROCÉDÉ DE FABRICATION D'UN ÉLÉMENT HYBRIDE PLASTIQUE-MÉTAL

(30) Priorität: 15.12.2015 DE 102015016259
(43) Veröffentlichungstag der Anmeldung: 24.10.2018
(73) Patentinhaber: INPRO Innovationsgesellschaft für fortgeschrittene Produktionssysteme in der Fahrzeugindustrie mbH, 10623 Berlin (DE)
(72) Erfinder: HOYER, Olaf, 16727 Oberkrämer (DE); SCHULENBURG, Matthias, 13593 Berlin (DE); MINKOW, Michael, 13593 Berlin (DE); ESSER, Gerd, 14532 Kleinmachnow (DE)
(74) Vertreter: Hoffmann, Klaus-Dieter
(86) Internationale Anmeldenummer: PCT/DE2016/000437
(87) Internationale Veröffentlichungsnummer: WO 2017/101897

(56) Entgegenhaltungen:
- DE-A1- 10 357 180
- DE-A1-102006 007 253
- DE-A1-102008 058 225
- US-A- 1 960 042
- US-A1- 2003 209 288

## Beschreibung

Die Erfindung betrifft ein Verfahren zum Herstellen eines Kunststoff-Metall-Hybridbauteils, bei dem zur Haftverbesserung einer mit einer Korrosionsschutzschicht versehenen Metalloberfläche eines Grundkörpers aus Metall und mindestens einer Kunststoffkomponente die Korrosionsschutzschicht der Metalloberfläche mit einer Oberflächenstruktur mit Hinterschnitten versehen wird, die jeweils in einem Direktanspritzprozess mit der mindestens einen Kunststoffkomponente zumindest teilweise so gefüllt werden, dass eine Hinterkrallung letzterer in den Hinterschnitten der Oberflächenstruktur der Korrosionsschutzschicht erfolgt, wobei das Kunststoff-Metall-Hybridbauteil gebildet wird.

Leichtbauteile in Hybridbauweise zeichnen sich durch den Formschluss eines zumeist aus Metall bestehenden Grundkörpers und einem in diesen eingefügten oder angefügten Kunststoffteil aus. Derartige Leichtbauteile finden in entsprechender Gestaltung z.B. Verwendung für Fahrzeugteile wie z.B. Bauteile eines Personenkraftwagens oder Lastkraftwagens.

Werden thermische Spritzschichten auf metallische Substrate abgeschieden, so treten in der Regel aufgrund der hohen Temperaturunterschiede zwischen der Spritzschicht und dem Substrat hohe mechanische Spannungen auf, die sich negativ auf die Schichthaftung auswirken. Bei den üblichen thermischen Spritzverfahren, wie z.B. Plasmaspritzen, Flammspritzen, Hochgeschwindigkeitsflammspritzen oder Lichtbogendrahtspritzen werden die Spritzpartikel in schmelzflüssigem Zustand auf das kalte Substrat abgeschieden und mit hoher Abkühlgeschwindigkeit abgeschreckt. Ebenso haben auch die unterschiedlichen mechanischen und thermischen Eigenschaften von Schicht und Substrat, insbesondere unter hoher mechanischer oder Temperaturwechsel-Belastung einen negativen Einfluss auf die Schichthaftung.

Die Haftung auf einer glatten und unbehandelten Substratoberfläche ist in aller Regel ungenügend. Zur Verbesserung der Haftung thermischer Spritzschichten ist im Allgemeinen eine Aufrauhung der Substrat-Oberfläche vor der thermischen Beschichtung erforderlich.

Hierdurch wird die Kontaktfläche zwischen Substrat- und Schichtmaterial erhöht, sowie ein gewisses Maß an mechanischer Verklammerung bewirkt. Eine derartige Aufrauhung kann beispielsweise durch Sandstrahlen, Schleifen oder Feindrehen bzw. Zerspanen erfolgen.

Bei einem aus der JP 2014-051041 A bekannten Verfahren werden zur Haftverbesserung von Metalloberfläche und mindestens einer Kunststoffkomponente in einem ersten Verfahrensschritt in die Metalloberfläche zu deren Aufrauhung mittels Kurzpulslaserstrahlung makroskopische und/oder mikroskopische hinterschnittartige Schlitze eingebracht, deren konkavartiger Öffnungsbereich in der Draufsicht sowie deren Längsschnitt jeweils eine sich wiederholende, geometrisch genau definierte Form aufweisen sollen. Hierbei werden für den Öffnungsbereich der in die Metalloberfläche einzubringenden Schlitze in dessen Draufsicht definierte, sich stets wiederholende Formen wie Kreisform, Form eines Blattes eines Ginkgobaums, Bumerangform, Ellipsenform, Quadratform, Polygonform oder dgl, sowie für den Längsschnitt der Schlitze Dreiecksform, Vierecksform oder Trapezform vorgegeben. In einem zweiten Verfahrensschritt werden dann in einem Direktanspritzprozess die in der Metalloberfläche derart genau ausgeformten Schlitze mit der mindestens einen Kunststoffkomponente zumindest teilweise so gefüllt, dass eine verbesserte Haftung zwischen letzterer und den Schlitzen in der Metalloberfläche erreicht wird.

In der DE 10 2007 023 418 B4 ist weiterhin ein Verfahren zum Aufrauen von Bauteiloberflächen, insbesondere aus Metall, Kunststoff oder Keramik zur Haftverbesserung von hierauf thermisch aufzutragenden thermischen Spritzschichten beschrieben, indem die Oberfläche unter Bildung von mikroskopischen Hinterschnitten aufgeraut wird, wobei die Oberfläche mittels gepulster Laserstrahlen mit Neigungswinkeln im Bereich von 20° bis 80° schräg verlaufende Formtaschen eingebracht werden, die so dimensioniert sind, dass mindestens eine der Kanten der Formtaschen einen Hinterschnitt in Bezug zur Metalloberfläche bildet, wobei die Oberfläche zumindest bereichsweise mehrfach mit gepulsten Laserstrahlen behandelt wird, die andere Richtungswinkel, Neigungswinkel und/oder andere Laserenergien aufweisen. Als vorteilhaft für die Qualität der Beschichtung wird dort beschrieben, dass der Spritzstrahl mit derselben Neigung wie die Formtaschen über die Oberfläche geführt werden soll. Hierzu sollen die Formtaschen gleichsinnig parallel mit lediglich einer in Bezug auf die Oberfläche hinterschnittenen Kante ausgebildet sein. Ein passender, geeigneter Winkel des Spritzstrahls muss daher umso genauer definiert werden, je tiefer die Formtaschen sind. Die Toleranzen der Winkeleinstellung nehmen entsprechend ab. Ein nicht geeignet gewählter Spritzstrahl kann daher zur unvollständigen Füllung der Formtaschen führen, was die Haftungsfestigkeit der Spritzschicht negativ beeinflusst bzw. verringert.

Aus der DE 10 2006 004 769 A1 geht zudem ein Verfahren zum Aufrauen von Metalloberflächen zur Haftverbesserung von hierauf thermisch gespritzten Schichten als bekannt hervor. Hierbei werden in einem ersten Verfahrensschritt in einer materialabhebenden oder materialabtragenden Behandlung Ausnehmungen oder Vertiefungen in die Oberfläche eingebracht, so dass das überstehende Metall der Oberfläche erhabene Mikrostrukturen, insbesondere Vorsprünge, Rillen, Ausstülpungen oder Ausbuchtungen, bildet, wobei diese Mikrostrukturen in mindestens einem zweiten Verfahrensschritt in der Weise verformend und/oder brechend nachbearbeitet werden, dass ein wesentlicher Anteil der Strukturen Hinterschnitte bezüglich der Oberfläche ausbildet.

In der DE 10 2008 040 782 A1 wird ferner ein Verfahren zum Herstellen eines Bauteilverbundes, insbesondere für Kraftfahrzeuganwendungen als bekannt offenbart, umfassend mindestens ein erstes Bauteil mit einer ersten Kontaktoberfläche und mindestens ein zweites Bauteil mit einer an der ersten Kontaktoberfläche anliegenden zweiten Kontaktoberfläche, bei dem auf der erste Kontaktoberfläche des ersten Bauteils mittels eines Lasers eine Oberflächenstruktur derart erzeugt wird, dass diese eine von einer Nanostruktur überlagerte Mikrostruktur aufweist. Nach der Oberflächenstrukturierung der ersten Kontaktoberfläche des ersten Bauteils wird dieses mit dem zweiten Bauteil, das aus Kunststoffmaterial, insbesondere aus einem thermoplastischen Material ausgebildet ist, durch zumindest abschnittweises Umspritzen des ersten Bauteils mit dem zweiten Bauteil formschlüssig verbunden.

Aus der DE 102008058225 A1 ist schließlich ein Leichtbauteil in Hybridbauweise aus einem Grundkörper aus einem verzinkten Stahl- oder Eisen-Grundkörper bekannt, der mittels Thermoplasten verstärkt wird und für die Übertragung von hohen mechanischen Belastungen geeignet ist. Der verzinkte Stahl- oder Eisen-Grundkörper wird einer Oberflächenbehandlung unterzogen, um einen festen Formschluss zwischen Grundkörper und Thermoplasten zu erzielen. Die Vorbehandlung des verzinkten Stahl- oder Eisen-Grundkörpers kann durch verschiedene Verfahren erfolgen, z.B. kann eine Laserbehandlung der Zink-Oberfläche mittels gepulster Nd:YAG Laserstrahlung erfolgen. Dadurch können unterschiedliche Strukturen auf der Zinkoberfläche aufgebracht werden. Bevorzugte Strukturen sind Punktstruktur, Linienstruktur oder Kreuzstruktur. Das Anspritzen des thermoplastischen Kunststoffs erfolgt dann bevorzugt in einem Arbeitsgang.

Bei den bekannten bisherigen Verfahren zur Herstellung von Leichtbauteilen bzw. Hybridbauteilen aus Metall und Kunststoff erfolgt die Oberflächenstrukturierung des ersteren durch ein abtragendes Verfahren, z. B. durch ein abtragendes Laserverfahren. Dies hat den Nachteil, dass bei korrosionsgeschützten Blechen bzw. Substraten die Schutzschicht beschädigt oder zerstört wird. Desweiteren wird der Substratquerschnitt in der Strukturierungszone durch den Laserabtrag (Perforation) verringert. Ein weiterer Nachteil ist eine Gefügeveränderung in der Wärmeeinflusszone.

Das Dokument DE 10 2006 007 253 A1 beschreibt ferner ein Kraftfahrzeug-Hybridbauteil, insbesondere ein Struktur- oder Fahrwerkbauteil, umfassend ein Metallbauteil und ein damit verbundenes Kunststoffbauteil. Das Metallbauteil und das Kunststoffbauteil sind unter Eingliederung einer metallischen Formschlusslage miteinander verbunden. Die Formschluss lage ist stoffschlüssig mit dem Metallbauteil gefügt und besitzt Ausnehmungen und Streben, die von dem Kunststoffbauteil umspritzt sind. Die Formschlusslage kann aus Metallgewebe, einer Streckmetalllage oder aus Metallschaum bestehen.

Der vorliegenden Erfindung liegt die Aufgabe zugrunde, ein Verfahren der eingangs erwähnten Art zur Verfügung zu stellen, mit dem bei der Herstellung der die Hinterschnitte aufweisenden Oberflächenstruktur der korrosionsgeschützten Metalloberfläche des Grundkörpers aus Metall eine Beschädigung der Korrosionsschutzschicht sowie die zuvor genannten Nachteile vermieden werden.

Gemäß der vorliegenden Erfindung wird ein Verfahren zum Herstellen eines Kunststoff-Metall-Hybridbauteils bereitgestellt, bei dem zur Haftverbesserung einer mit einer Korrosionsschutzschicht aus Zink versehenen Metalloberfläche eines Grundkörpers aus Metall und mindestens einer Kunststoffkomponente die Korrosionsschutzschicht der Metalloberfläche des Grundkörpers mit einer Oberflächenstruktur mit Hinterschnitten versehen wird, die jeweils in einem Direktanspritzprozess mit der mindestens einen Kunststoffkomponente zumindest teilweise so gefüllt werden, dass eine Hinterkrallung letzterer in den Hinterschnitten der Oberflächenstruktur der Korrosionsschutzschicht der Metalloberfläche des Grundkörpers erfolgt, wobei das Kunststoff-Metall-Hybridbauteil gebildet wird, wobei gezielt und begrenzt ein mit der Korrosionsschutzschicht der Metalloberfläche des Grundkörpers aus Metall gut fügbarer und elektrochemisch verträglicher Zusatzwerkstoff in Form aufeinanderfolgender vorzugsweise metallischer Elemente geometrisch bestimmter und/oder geometrisch unbestimmter Gestalt auf der Korrosionsschutzschicht der Metalloberfläche des Grundkörpers aus Metall bei relativer Bewegung zu diesem aufgebracht wird und die auf der Korrosionsschutzschicht aufgetragenen metallischen Elemente des Zusatzwerkstoffes jeweils mittels eines Lasers aufgeschmolzen und auf der Korrosionsschutzschicht aufgeschweißt werden, wobei
o als Zusatzwerkstoff bandförmige Drahtwolle verwendet wird, wobei die bandförmige Drahtwolle abschnittsweise als miteinander verbundene metallische Elemente geometrisch bestimmter und/oder geometrisch unbestimmter Form auf der Korrosionsschutzschicht fortlaufend aufgetragen werden, oder
o als Zusatzwerkstoff ein von einer Drahtrolle abrollender Strukturdraht verwendet wird, der mittels eines Drahtumformers, der oberhalb der Korrosionsschutzschicht positioniert und relativ zu dieser bewegt wird, vom abgerollten Ende des Strukturdrahtes her fortlaufend abschnittsweise in miteinander verbundene metallische Elemente geometrisch bestimmter und/oder geometrisch unbestimmter Form umgeformt wird, die fortlaufend jeweils vom abgerollten Ende des Strukturdrahtes her auf der Korrosionsschutzschicht aufgetragen werden, oder
o die Elemente des Zusatzwerkstoffes von Abschnitten geometrisch bestimmter und/oder geometrisch unbestimmter Form eines von einer Rolle abgerollten Strukturdrahtes gebildet werden, die mittels eines Drahtabschneiders, der oberhalb der Korrosionsschutzschicht positioniert und relativ zu dieser bewegt wird, vom abgerollten Ende des Strukturdrahtes her einzeln abgetrennt, vom Drahtabschneider herabfallend auf der Korrosionsschutzschicht fortlaufend im Abstand zueinander aufgetragen werden, oder
o Partikel als metallische Elemente des Zusatzwerkstoffes verwendet werden, die vereinzelt aufeinanderfolgend in geometrisch bestimmter und/oder unbestimmter Form auf der Korrosionsschutzschicht aufgetragen werden.

Bevorzugt werden der Strukturdraht und die bandförmige Drahtwolle mit einem Durchmesser von wenigen Zehntel- bis einige Millimeter gewählt.

Bevorzugt werden die Partikel mittels einer mit Metall-Pulver gefüllten trichterförmigen Auftragsvorrichtung, die oberhalb der Korrosionsschutzschicht aus Zink positioniert und relativ zu dieser bewegt wird, auf der Korrosionsschutzschicht als metallische Elemente des mit letzterer gut fügbaren metallischen Zusatzwerkstoffes in geometrisch bestimmter und/oder geometrisch unbestimmter Form aufgetragen und nachfolgend jeweils mittels des Laser oder der alternativen fokussierten Wärmequelle aufgeschmolzen und auf der Korrosionsschutzschicht aufgeschweißt.

Vorzugsweise wird die Größe der Partikel ebenfalls im Bereich von wenigen Zehntel- bis einige Millimeter gewählt, so dass die Strukturierung in der Oberfläche der direkt angespritzten Kunststoffmasse nicht sichtbar wird.

Weiterhin wird für eine Oberflächenbeladung mit Partikeln derart gesorgt, dass die Zugänglichkeit der Oberfläche des Grundkörpers für die Kunststoffschmelze gewährleistet ist.

Bevorzugt werden Abschnitte des Strukturdrahtes, dessen Durchmesser im Bereich von wenigen zehntel- bis einige Millimeter gewählt wird, mit einem Durchmesser/Längenverhältnis < 1 mittels des Drahtabschneiders vom abgerollten Strukturdraht einzeln abgetrennt.

Das erfindungsgemäße Verfahren erweist sich insbesondere dadurch als vorteilhaft, dass die Oberflächenstruktur mit Hinterschneidungen auf der Korrosionsschutzschicht ohne deren Beschädigung hergestellt wird. Aufgrund des zusätzlichen Materialauftrages bleibt der Korrosionsschutz der Metalloberfläche bestehen. Zudem erfolgt keine Schwächung des Substratquerschnitts. Hierdurch wird die Dimensionierung der Substratgeometrie erheblich erleichtert. Außerdem erfolgt keine Gefügeveränderung im Substratmaterial während der Laserbehandlung. Das Verfahren ermöglicht eine gezielte lokale Strukturierung sowie maßgeschneiderte Metallgradientenschichten. Ferner kann eine Optimierung der Verbundeigenschaften bei Klebungen erfolgen.

Die Erfindung wird nun unter Bezug auf die Figuren der Zeichnungen erläutert. In diesen sind:
**Fig. 1** eine schematische Darstellung der Herstellung der die Hinterschnitte aufweisenden Korrosionsschutzschicht der Metalloberfläche des Grundkörpers aus Stahl bei Verwendung eines von einer Strukturdrahtrolle abgerollten Strukturdrahtes als mit der Korrosionsschutzschicht gut fügbarem Zusatzwerkstoff,
**Fig. 2** eine Freischnittdarstellung des mit dem erfindungsgemäßen Verfahren hergestellten Kunststoff-Metall-Hybridbauteils, wobei das Auftragsschweißens des Strukturdrahtes gemäß Fig. 1 auf der Korrosionsschutzschicht erfolgt ist,
**Fig. 3** eine der Fig. 1 entsprechende schematische Darstellung, jedoch bei Verwendung von bandförmiger Drahtwolle als mit der Korrosionsschutzschicht gut fügbarem Zusatzwerkstoff,
**Fig. 4** eine der Fig. 1 entsprechende schematische Darstellung bei Verwendung von Partikeln eines Pulvers als mit der Korrosionsschutzschicht gut fügbarem Zusatzwerkstoff,
**Fig. 5** eine Freischnittdarstellung des mit dem erfindungsgemäßen Verfahren hergestellten Kunststoff-Metall-Hybridbauteils, wobei ein Laserauftragsschweißen oder Flammspritzen der Partikel des Pulvers gemäß Fig. 4 auf der Korrosionsschutzschicht erfolgt ist.
**Fig. 6** eine schematische Darstellung entsprechend der Fig. 4, jedoch bei Verwendung von abgetrennten Abschnitten des von der Strukturdrahtrolle abgerollten Strukturdrahtes als mit der Korrosionsschutzschicht gut fügbaren Zusatzwerkstoff, und
**Fig. 7** eine Freischnittdarstellung des mit dem erfindungsgemäßen Verfahren hergestellten Kunststoff-Metall-Hybridbauteils, wobei das Laserauftragsschweißen gemäß Fig. 6 der mittels des Drahtabschneiders vom Strukturdraht abgetrennten und auf die Korrosionsschutzschicht herabgefallenen Abschnitte des Strukturdrahtes auf der Korrosionsschutzschicht erfolgt ist.

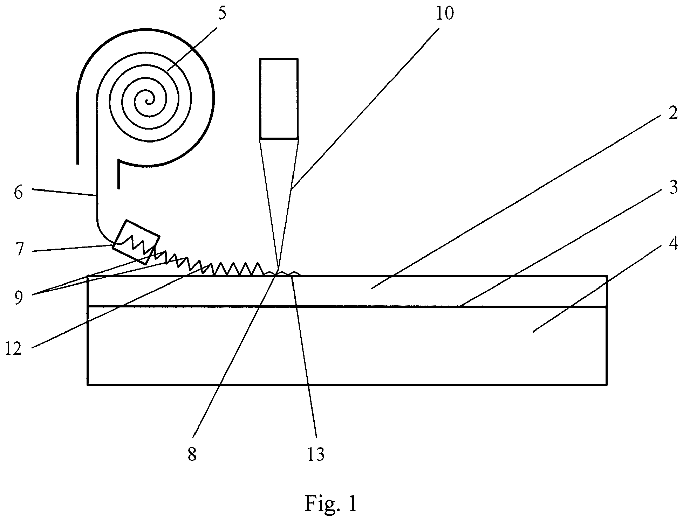

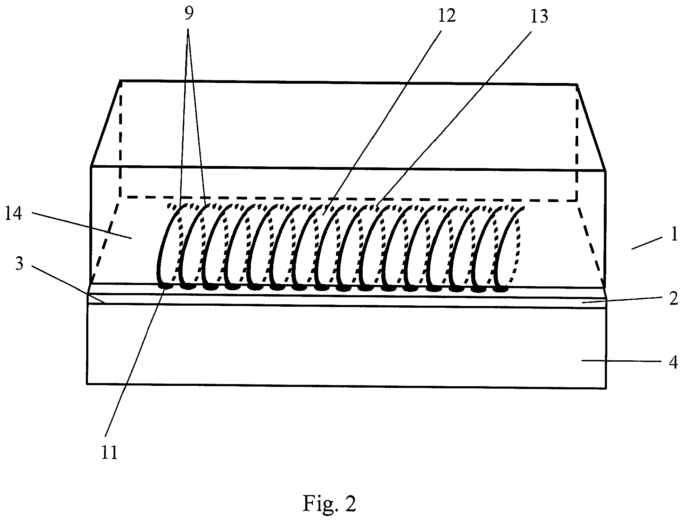

Wie Fig. 1 zeigt, wird bei einer Ausführungsform des Verfahrens zum Herstellen eines Kunststoff-Metall-Hybridbauteils 1, das in Figur 2 schematisch in einer Freischnittdarstellung gezeigt ist, als mit einer Korrosionsschutzschicht 2 aus Zink einer Metalloberfläche 3 eines Grundkörpers 4 aus Stahl gut fügbaren Zusatzwerkstoff ein von einer Strukturdrahtrolle 5 abgerollter Strukturdraht 6 verwendet. Der Strukturdraht 6 wird mittels eines Drahtumformers 7, der oberhalb der Korrosionsschutzschicht 2 positioniert und relativ zu dieser bewegt wird, vom abgerollten Ende 8 des Strukturdrahtes 6 her fortlaufend abschnittsweise in miteinander verbundene metallische Elemente 9 geometrisch bestimmter und/oder geometrisch unbestimmter Form umgeformt. Die miteinander verbundenen Elemente 9 des umgeformten Strukturdrahtes 6 werden dabei fortlaufend jeweils vom abgerollten Ende 8 des Strukturdrahtes 6 her auf der Korrosionsschutzschicht 2 aufgetragen und mittels eines Laser 10 oder einer alternativen fokussierten Wärmequelle auf der Korrosionsschutzschicht 2 an Schweißpunkten 11 aufgeschweißt, wie Fig. 2 zeigt. Hierbei wird eine Hinterschnitte 12 aufweisende Oberflächenstruktur 13 der Korrosionsschutzschicht 2 der Metalloberfläche 3 des Grundkörpers 4 hergestellt.

Wie aus Fig. 2 zudem hervorgeht, werden die miteinander verbundenen und auf der Korrosionsschutzschicht 2 in den Schweißpunkten 11 mittels des Lasers 10 aufgeschweißten Elemente 9 des umgeformten Strukturdrahtes 6 in einem Direktanspritzprozess von einer Schmelze einer thermoplastischen Kunststoffkomponente 14 umflossen, wobei die Hinterschnitte 12 der Oberflächenstruktur 13 der Korrosionsschutzschicht 2 zumindest teilweise von der Kunststoffkomponente 14 so gefüllt werden, dass eine Hinterkrallung letzterer in den Hinterschnitten 12 der Oberflächenstruktur 13 der Korrosionsschutzschicht 2 erfolgt, wobei das Kunststoff-Metall-Hybridbauteil 1 gebildet wird.

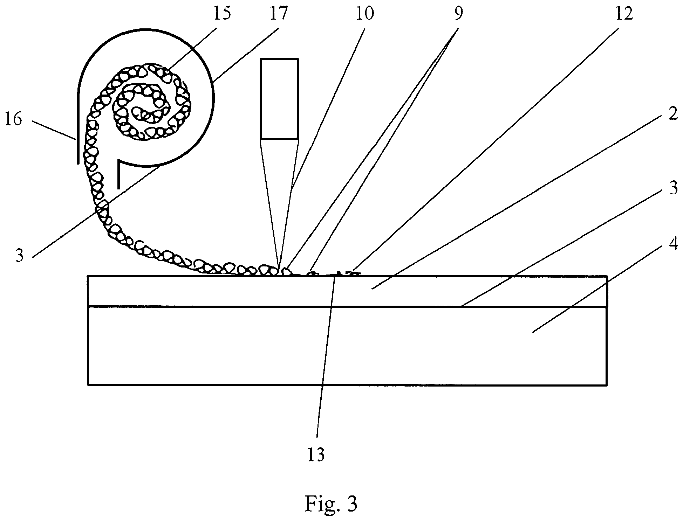

Wie Fig. 3 zeigt, kann gemäß einer alternativen Ausführungsform des Verfahrens auch bandförmige Drahtwolle 15 als mit der Korrosionsschutzschicht 2 gut fügbarer Zusatzwerkstoff verwendet werden. Hierzu wird die Drahtwolle 15 aus einer kanalartigen Führung 16 eines mit der Drahtwolle 15 gefüllten Speichers 17, der oberhalb der Korrosionsschutzschicht 2 z.B. aus Zink der Metalloberfläche 3 des Grundkörpers 4 z.B. aus Stahl positioniert und relativ zur Korrosionsschutzschicht 2 bewegt wird, bandförmig herausgeführt und vom herausgeführten Ende 18 her abschnittsweise in Form miteinander verbundener metallischer Elemente 9 geometrisch bestimmter und/oder geometrisch unbestimmter Gestalt auf der Korrosionsschutzschicht 2 als mit dieser gut fügbarer Zusatzwerkstoff fortlaufend aufgetragen. Die auf die Korrosionsschutzschicht 2 aufgetragenen Elemente 9 der bandförmigen Drahtwolle 15 werden dann jeweils mittels des Lasers 10 oder einer alternativen fokussierten Wärmequelle aufgeschmolzen und auf der Korrosionsschutzschicht 2 aufgeschweißt, wobei die die Hinterschnitte 12 aufweisende Oberflächenstruktur 13 der Korrosionsschutzschicht 2 der Metalloberfläche 3 des Grundkörpers 4 hergestellt wird. In dem anschließenden Direktanspritzprozess erfolgt dann die Herstellung des Kunststoff-Metall-Hybridbauteils 1 entsprechend wie oben bezüglich Fig. 2 beschrieben.

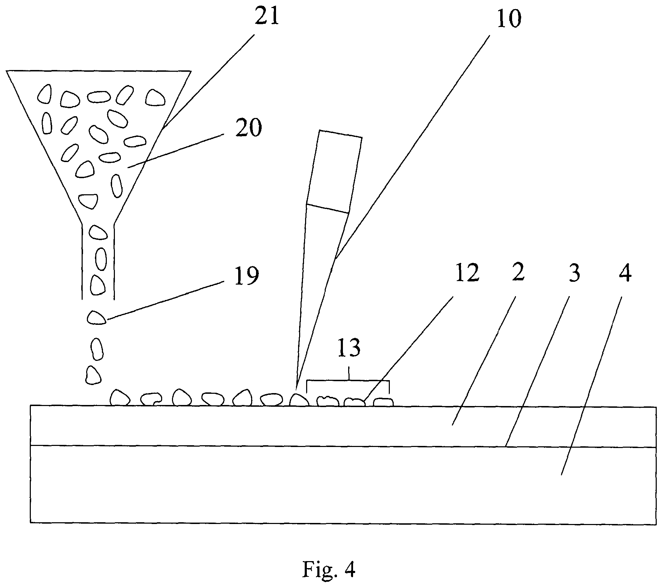

Wie aus Fig. 4 hervorgeht, können gemäß einer weiteren alternativen Ausführungsform des Verfahrens Partikel 19 als metallische Elemente des mit der Korrosionsschutzschicht 2 aus Zink der Metalloberfläche 3 des Grundkörpers 4 aus Stahl gut fügbaren Zusatzwerkstoffes verwendet werden. Hierzu werden die Partikel 19 mittels einer mit Pulver 20 gefüllten trichterförmigen Auftragsvorrichtung 21, die oberhalb der Korrosionsschutzschicht 2 positioniert und relativ zu dieser bewegt wird, auf der Korrosionsschutzschicht 2 der Metalloberfläche 3 des Grundkörpers 4 in geometrisch bestimmter und/oder geometrisch unbestimmter Form aufgetragen und nachfolgend jeweils mittels des Laser 10 oder der alternativen fokussierten Wärmequelle aufgeschmolzen und auf der Korrosionsschutzschicht 2 aufgeschweißt. Hierbei wird die die Hinterschnitte 10 aufweisende Oberflächenstruktur 13 der Korrosionsschutzschicht 4 der Metalloberfläche 5 des Grundkörpers 6 hergestellt.

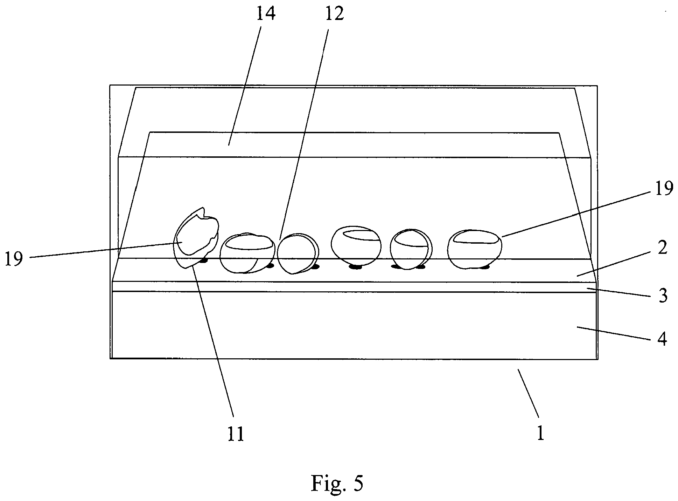

Wie Fig. 5 verdeutlicht, werden anschließend im Direktanspritzprozess die auf der Korrosionsschutzschicht 2 jeweils in einem der Schweißpunkte 11 aufgeschweißten Partikel 19 von der Schmelze der thermoplastischen Kunststoffkomponente 14 umflossen. Hierbei werden die Hinterschnitte 12 der Oberflächenstruktur 13 der Korrosionsschutzschicht 2 jeweils mit der Kunststoffkomponente 14 zumindest teilweise so gefüllt, dass eine Hinterkrallung letzterer in den Hinterschnitten 12 der Oberflächenstruktur 13 der Korrosionsschutzschicht 2 der Metalloberfläche 3 des Grundkörpers 4 aus Stahl erfolgt, wobei das Kunststoff-Metall-Hybridbauteil 1 gebildet wird.

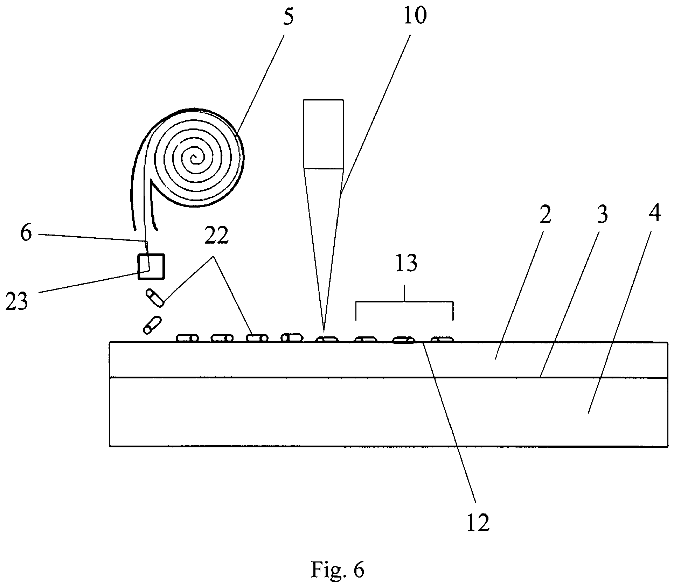

Fig. 6 zeigt eine bezüglich Fig. 4 alternative Ausführungsform des Verfahrens, bei der die Elemente des mit der Korrosionsschutzschicht 2 aus Zink der Metalloberfläche 3 des Grundkörpers 4 aus Stahl gut fügbaren Zusatzwerkstoffes von Abschnitten 22 geometrisch bestimmter und/oder geometrisch unbestimmter Form des Strukturdrahtes 6 gebildet werden. Hierzu werden die Abschnitte 22 des von der Strukturdrahtrolle 5 abgerollten Strukturdrahtes 6 mittels eines Drahtabschneiders 23, der oberhalb der Korrosionsschutzschicht 2 positioniert und relativ zu dieser bewegt wird, in der geometrisch bestimmten und/oder geometrisch unbestimmten Form einzeln abgetrennt, von dem Drahtabschneider 23 herabfallend auf der Korrosionsschutzschicht 2 fortlaufend im Abstand zueinander aufgetragen sowie mittels des Lasers 10 oder der alternativen fokussierten Wärmequelle jeweils aufgeschmolzen und auf der Korrosionsschutzschicht 2 aufgeschweißt, wobei die die Hinterschnitte 12 aufweisende Oberflächenstruktur 13 der Korrosionsschutzschicht 2 der Metalloberfläche 3 des Grundkörpers 4 hergestellt wird.

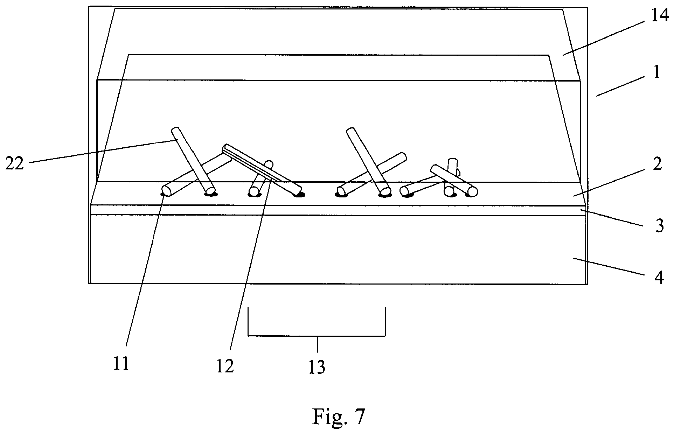

Wie aus Fig. 7 ersichtlich ist, werden anschließend in dem Direktanspritzprozess die auf der Korrosionsschutzschicht 2 jeweils in einem der Schweißpunkte 11 aufgeschweißten Abschnitte 22 des Strukturdrahtes 6 von der Schmelze der thermoplastischen Kunststoffkomponente 14 umflossen. Hierbei werden die Hinterschnitte 12 der Oberflächenstruktur 13 der Korrosionsschutzschicht 2 jeweils mit der Kunststoffkomponente 14 zumindest teilweise so gefüllt, dass eine Hinterkrallung letzterer in den Hinterschnitten 12 der Oberflächenstruktur 13 der Korrosionsschutzschicht 2 der Metalloberfläche 3 des Grundkörpers 4 aus Stahl erfolgt, wobei das Kunststoff-Metall-Hybridbauteil 1 gebildet wird.

Es versteht sich, das die Ausführungsformen der vorliegenden Erfindung nicht beschränkt sind auf die speziellen Strukturen, Verfahrensschritte oder Materialien, die hier offenbart sind, sondern auf deren Äquivalente ausgedehnt werden können, wie es für einen Durchschnittsfachmann auf den relevanten Gebieten erkennbar ist. Es versteht sich, dass die hier benutzte Terminologie lediglich zum Beschreiben bestimmter Ausführungsformen verwendet wird und nicht als beschränkend auszulegen ist. Die beschriebenen Merkmale, Strukturen oder Eigenschaften können in jeder geeigneten Weise in einer oder mehreren Ausführungsformen kombiniert werden.

### Bezugszeichenliste:

- **1**: Kunststoff-Metall-Hybridbauteil
- **2**: Korrosionsschutzschicht
- **3**: Metalloberfläche
- **4**: Grundkörper
- **5**: Strukturdrahtrolle
- **6**: Strukturdraht
- **7**: Drahtumformer
- **8**: abgerolltes Ende des Strukturdrahtes
- **9**: metallische Elemente
- **10**: Laser
- **11**: Schweißpunkte
- **12**: Hinterschnitte
- **13**: Oberflächenstruktur
- **14**: thermoplastische Kunststoffkomponente
- **15**: Drahtwolle
- **16**: kanalartige Führung
- **17**: Speicher
- **18**: Ende der bandförmigen Drahtrolle
- **19**: Partikel
- **20**: Pulver
- **21**: trichterförmige Auftragsvorrichtung
- **22**: abgetrennte Abschnitte des Strukturdrahtes
- **23**: Drahtabschneider

## Patentansprüche

1. Verfahren zum Herstellen eines Kunststoff-Metall-Hybridbauteils (1), bei dem zur Haftverbesserung einer mit einer Korrosionsschutzschicht (2) aus Zink versehenen Metalloberfläche (3) eines Grundkörpers (4) aus Metall und mindestens einer Kunststoffkomponente die Korrosionsschutzschicht (2) der Metalloberfläche (3) des Grundkörpers (4) mit einer Oberflächenstruktur (13) mit Hinterschnitten (12) versehen wird, die jeweils in einem Direktanspritzprozess mit der mindestens einen Kunststoffkomponente zumindest teilweise so gefüllt werden, dass eine Hinterkrallung letzterer in den Hinterschnitten (12) der Oberflächenstruktur (13) der Korrosionsschutzschicht (2) der Metalloberfläche (3) des Grundkörpers (4) erfolgt, wobei das Kunststoff-Metall-Hybridbauteil (1) gebildet wird, wobei gezielt und begrenzt ein mit der Korrosionsschutzschicht (2) der Metalloberfläche (3) des Grundkörpers (4) gut fügbarer und elektrochemisch verträglicher Zusatzwerkstoff in Form aufeinanderfolgender Elemente (9) geometrisch bestimmter und/oder geometrisch unbestimmter Gestalt auf der Korrosionsschutzschicht (2) der Metalloberfläche (3) des Grundkörpers (4) bei relativer Bewegung zu diesem aufgebracht wird, und die auf der Korrosionsschutzschicht (2) aufgetragenen Elemente (9) des Zusatzwerkstoffes jeweils mittels eines Lasers aufgeschmolzen und auf der Korrosionsschutzschicht (2) aufgeschweißt werden, wobei
o als Zusatzwerkstoff bandförmige Drahtwolle (15) verwendet wird, wobei die bandförmige Drahtwolle (15) abschnittsweise als miteinander verbundene metallische Elemente (9) geometrisch bestimmter und/oder geometrisch unbestimmter Form auf der Korrosionsschutzschicht (2) fortlaufend aufgetragen werden, oder
o als Zusatzwerkstoff ein von einer Drahtrolle (5) abrollender Strukturdraht (6) verwendet wird, der mittels eines Drahtumformers (7), der oberhalb der Korrosionsschutzschicht (2) positioniert und relativ zu dieser bewegt wird, vom abgerollten Ende (8) des Strukturdrahtes (6) her fortlaufend abschnittsweise in miteinander verbundene metallische Elemente (9) geometrisch bestimmter und/oder geometrisch unbestimmter Form umgeformt wird, die fortlaufend jeweils vom abgerollten Ende (8) des Strukturdrahtes (6) her auf der Korrosionsschutzschicht (2) aufgetragen werden, oder
o die Elemente (9) des Zusatzwerkstoffes von Abschnitten geometrisch bestimmter und/oder geometrisch unbestimmter Form eines von einer Rolle (5) abgerollten Strukturdrahtes (6) gebildet werden, die mittels eines Drahtabschneiders (23), der oberhalb der Korrosionsschutzschicht (2) positioniert und relativ zu dieser bewegt wird, vom abgerollten Ende (18) des Strukturdrahtes (6) her einzeln abgetrennt, vom Drahtabschneider (23) herabfallend auf der Korrosionsschutzschicht (2) fortlaufend im Abstand zueinander aufgetragen werden, oder
o Partikel (19) als metallische Elemente (9) des Zusatzwerkstoffes verwendet werden, die vereinzelt aufeinanderfolgend in geometrisch bestimmter und/oder unbestimmter Form auf der Korrosionsschutzschicht (2) aufgetragen werden.

## Claims

1. A method for producing a plastics-metal hybrid component (1), in which, in order to improve the adhesion of a metal surface (3) of a main body (4) made of metal provided with a corrosion protection layer (2) made of zinc and at least one plastics component, the corrosion protection layer (2) of the metal surface (3) of the main body (4) is provided with a surface structure (13) having undercuts (12), which are each at least partially filled with the at least one plastics component in a direct injection process such that the latter engages behind the undercuts (12) in the surface structure (13) of the corrosion protection layer (2) of the metal surface (3) of the main body (4), wherein the plastics-metal hybrid component (1) is formed, wherein an additional substance which can be readily joined to and is electrochemically compatible with the corrosion protection layer (2) of the metal surface (3) of the main body (4) is applied, in a targeted and limited manner, in the form of successive elements (9) of a geometrically determinate and/or geometrically indeterminate shape to the corrosion protection layer (2) of the metal surface (3) of the main body (4) in a movement relative thereto, and the elements (9) of the additional substance applied to the corrosion protection layer (2) are each melted by means of a laser and welded to the corrosion protection layer (2), wherein
o strip-shaped wire wool (15) is used as the additional substance, wherein the strip-shaped wire wool (15) can be consecutively applied to the corrosion protection layer (2), in portions, as interconnected metal elements (9) of a geometrically determinate and/or geometrically indeterminate shape, or
o a structuring wire (6) which is unrolled from a wire reel (5) is used as the additional substance, which wire is consecutively formed, in portions, from the unrolled end (8) of the structuring wire (6), into interconnected metal elements (9) of a geometrically determinate and/or geometrically indeterminate shape by means of a wire former (7), which is positioned above the corrosion protection layer (2) and is moved relative thereto, which elements are each consecutively applied to the corrosion protection layer (2) from the unrolled end (8) of the structuring wire (6), or
o the elements (9) of the additional substance are formed by portions of a geometrically determinate and/or geometrically indeterminate shape of a structuring wire (6) which is unrolled from a reel (5), which elements are individually cut off from the unrolled end (18) of the structuring wire (6) by means of a wire cutter (23), which is positioned above the corrosion protection layer (2) and is moved relative thereto, and which are applied to the corrosion protection layer (2) consecutively and at a distance from one another by falling down from the wire cutter (23), or
o particles (19) are used as metal elements (9) of the additional substance, which are individually and successively applied to the corrosion protection layer (2) in a geometrically determinate and/or geometrically indeterminate shape.

## Revendications

1. Procédé de fabrication d'un composant (1) hybride plastique-métal, dans lequel, pour améliorer l'adhérence d'une surface (3) métallique dotée d'une couche (2) de protection contre la corrosion en zinc d'un corps (4) de base en métal et d'au moins un composant en matière plastique, la couche (2) de protection contre la corrosion de la surface (3) métallique du corps (4) de base est dotée d'une structure (13) de surface avec des contre-dépouilles (12), chacune étant au moins partiellement remplie dans un processus d'injection directe avec au moins un composant en plastique de sorte qu'un accrochage arrière de ce dernier a lieu dans les contre-dépouilles (12) de la structure (13) de surface de la couche (2) de protection contre la corrosion de la surface (3) métallique du corps (4) de base, où le composant hybride plastique-métal est formé, où un matériau d'apport facilement assemblable et électrochimiquement compatible avec la couche (2) de protection contre la corrosion de la surface (3) métallique du corps (4) de base, sous la forme d'éléments (9) successifs de configuration géométriquement définie et/ou géométriquement indéfinie, est appliqué de manière ciblée et limitée sur la couche (2) de protection contre la corrosion de la surface (3) métallique du corps (4) de base lors d'un mouvement relatif par rapport à celle-ci, et les éléments (9), appliqués sur la couche (2) de protection contre la corrosion, du matériau d'apport sont fondus respectivement au moyen d'un laser et soudés sur la couche (2) de protection contre la corrosion, où
o en tant que matériau d'apport, de la laine (15) métallique en forme de bande est utilisée, la laine (15) métallique en forme de bande étant appliquée de manière continue par sections en tant qu'éléments (9) métalliques interconnectés de forme géométriquement définie et/ou géométriquement indéfinie sur la couche (2) de protection contre la corrosion, ou
o en tant que matériau d'apport, un fil (6) structurel déroulé d'un rouleau (5) de fil est utilisé, qui est positionné au-dessus de la couche (2) de protection contre la corrosion et déplacé par rapport à celle-ci au moyen d'un convertisseur (7) de fil, est formé en continu par sections à partir de l'extrémité (8) déroulée du fil (6) structurel en éléments (9) métalliques interconnectés de forme géométriquement définie et/ou géométriquement indéfinie, qui sont appliqués respectivement en continu sur la couche (2) de protection contre la corrosion à partir de l'extrémité (8) déroulée du fil (6) structurel, ou
o les éléments (9) du matériau d'apport sont formés par sections de forme géométriquement définie et/ou géométriquement indéfinie d'un fil (6) structurel déroulé à partir d'un rouleau (5), qui est coupé au moyen d'un coupe-fil (23) placé au-dessus de la couche (2) de protection contre la corrosion et déplacé par rapport à celle-ci, séparés individuellement de l'extrémité (18) déroulée du fil (6) structurel, appliqués en continu par le coupe-fil (23) à la couche (2) de protection contre la corrosion à distance l'un de l'autre, ou
o des particules (19) en tant éléments (9) métalliques du matériau d'apport sont utilisées, qui sont appliquées individuellement et successivement sous une forme géométriquement définie et/ou indéfinie à la couche (2) de protection contre la corrosion.
